# EUROPÄISCHE PATENTANMELDUNG

(11) **EP 2 752 612 A1**
(43) Veröffentlichungstag der Anmeldung: **09.07.2014**
(21) Anmeldenummer: 13150492.0
(22) Anmeldetag: 08.01.2013
(51) Int. Cl.: F21K 99/00, F21Y 101/02, F21Y 103/00

(54) **LED- Leuchtröhre und Verfahren zur Herstellung der LED- Leuchtröhre**

(71) Anmelder: Bayer MaterialScience AG, 51373 Leverkusen (DE)
(72) Erfinder: Ahlborn, Udo, 51399 Burscheid (DE)
(74) Vertreter: BIP Patents

(57) **Zusammenfassung**

Die Erfindung betrifft ein Verfahren zur Herstellung einer LED- Leuchtröhre (1) und eine solche LED- Leuchtröhre (1) mit einem sich in einer Längsachse (10) erstreckenden Rohrkörper (11) und wobei im Rohrkörper (11) ein LED- Leuchtmodul (12) angeordnet ist. Erfindungsgemäß ist vorgesehen, dass der Rohrkörper (11) in einem Coextrusionsverfahren aus einer lichtdurchlässigen Kunststoffkomponente (A) zur Bildung eines abstrahlseitigen Rohrteilkörpers (13) und einer lichtundurchlässigen Kunststoffkomponente (B) zur Bildung eines rückseitigen Rohrteilkörpers (14) hergestellt wird.

## Beschreibung

Die Erfindung betrifft ein Verfahren zur Herstellung einer LED-Leuchtröhre mit einem sich in einer Längsachse erstreckenden Rohrkörper und wobei im Rohrkörper ein LED-Leuchtmodul angeordnet ist. Ferner betrifft die Erfindung eine solche LED- Leuchtröhre mit einem sich in einer Längsachse erstreckenden Rohrkörper und wobei im Rohrkörper ein LED-Leuchtmodul angeordnet ist.

### STAND DER TECHNIK

Aus der US 2011/0090682 A1 ist eine LED-Leuchtröhre mit einem sich in einer Längsachse erstreckenden Rohrkörper bekannt, und im Rohrkörper ist ein LED-Leuchtmodul angeordnet. Das Verfahren zur Herstellung der LED-Leuchtröhre umfasst das seitliche Fügen von zwei halbschalenförmigen Elementen, aus denen der Rohrkörper der LED-Leuchtröhre gebildet wird. Die beiden halbschalenförmigen Elemente können an einem Verbindungsmittel angeklipst werden, und die halbschalenförmigen Elemente bilden nach dem Fügen am Verbindungsmittel einen kreisrunden Querschnitt des Rohrkörpers. Das LED-Leuchtmodul weist LED-Elemente auf, die an einer Seite des LED-Leuchtmoduls angeordnet sind und folglich nur an dieser Seite Licht emittieren. Die Herstellung der LED-Leuchtröhre ist folglich aufwendig und die möglichen Lichtfunktionen, insbesondere die Lichtausbeute, ist durch die lediglich einseitige Anordnung der LED-Elemente am LED-Leuchtmodul begrenzt.

Die US 2010/0302773 A1 zeigt eine LED-Leuchtröhre mit einem durchgehenden, halbschalenförmigen Kühlkörper, an den ein transparenter Deckel aus einem Polycarbonat angeordnet werden kann, so dass sich der Deckel und der Kühlkörper zu einem Rohrkörper mit einem runden Querschnitt ergänzen. Auch diese LED-Leuchtröhre ermöglicht lediglich die Ausendung von Licht über den nur einseitig angebrachten halbschalenförmigen Deckel, und die Herstellung der LED-Leuchtröhre gestaltet sich ebenfalls als aufwendig.

Die DE 20 2009 012 997 U1 zeigt eine LED- Leuchtröhre, die als Ersatz einer Leuchtstoffröhre eingesetzt werden kann und es ist angegeben, dass der Rohrkörper der LED- Leuchtröhre aus Kunststoff, d.h. aus einem Material, besteht.

### OFFENBARUNG DER ERFINDUNG

Die Aufgabe der vorliegenden Erfindung besteht darin, ein Verfahren zur Herstellung einer LED-Leuchtröhre sowie eine solche LED-Leuchtröhre zu schaffen, so dass eine vereinfachte Herstellung ermöglicht ist, ferner ergibt sich die Aufgabe, eine LED-Leuchtröhre mit einer verbesserten Lichtfunktion bereitzustellen.

Diese Aufgabe wird ausgehend zu einem Verfahren zur Herstellung einer LED-Leuchtröhre gemäß dem Oberbegriff des Anspruches 1 sowie ausgehend von einer LED-Leuchtröhre gemäß dem Oberbegriff des Anspruches 5 mit dem jeweils kennzeichnenden Merkmalen gelöst. Vorteilhafte Weiterbildungen der Erfindung sind in den abhängigen Ansprüchen angegeben.

Die Erfindung schließt die technische Lehre ein, dass für das Verfahren zur Herstellung der LED-Leuchtröhre der Röhrkörper in einem Coextrusionsverfahren aus einer lichtdurchlässigen Kunststoffkomponente zur Bildung eines abstrahlseitigen Rohrkörpers und aus einer lichtundurchlässigen oder transluzenten Kunststoffkomponente zur Bildung eines rückseitigen Rohrkörperteils hergestellt wird.

Ein Coextrusionsverfahren ermöglicht die Herstellung des Rohrkörpers aus zwei verschiedenen Kunststoffkomponenten, wobei die Kunststoffkomponenten ohne miteinander zu durchmischen Abschnitte des Rohrkörper-Querschnittes bilden können, die dem Rohrkörper abschnittsweise voneinander unterscheidbare Eigenschaften verleihen. Die voneinander unterscheidbaren Eigenschaften des Rohrkörpers sind über den Querschnitt des Rohrkörpers abschnittsweise gegeben, und der Rohrkörper ist in seiner Längsrichtung gleichförmig und insbesondere mit gleichbleibenden Eigenschaften gebildet. Durch das erfindungsgemäße Verfahren zur Herstellung des Rohrkörpers mit einem Coextrusionsverfahren müssen keine halbschalenförmigen Elemente miteinander oder mit einem Verbindungsteil verbunden werden, da der Rohrkörper mit den abschnittsweise verschiedenen Eigenschaften bereits im gemeinsamen Coextrusionsschritt bereitgestellt werden kann. In einem Coextrusionsverfahren werden die beiden Kunststoffkomponenten durch eine gemeinsame Matrize extrudiert, wobei jedoch keine Durchmischung der Kunststoffkomponenten stattfindet, und der Rohrkörper verlässt die Extrusionsmatrize mit den Kunststoffkomponenten, die jeweilige Umfangsabschnitte des Rohrkörpers bilden. Diese Abschnitte können einerseits lichtdurchlässig sein, beispielsweise um die Abstrahlseite der LED-Leuchtröhre zu bilden und andererseits lichtundurchlässig zu sein, um eine Rückseite der LED-Leuchtröhre zu bilden.

Mit besonderen Vorteil kann die lichtdurchlässige Kunststoffkomponente durch ein Polycarbonat oder durch ein Polymethylmethacrylat gebildet sein. Die lichtundurchlässige Kunststoffkomponente kann ebenfalls durch ein Polycarbonat oder durch ein Polymethylmethacrylat gebildet sein, wobei insbesondere die lichtundurchlässige Kunststoffkomponente eine Additivierung aufweisen kann, die die Lichtundurchlässigkeit bewirkt. Insbesondere kann der Rohrkörper vollständig aus Polycarbonat oder vollständig aus Polymethylmethacrylat ausgeführt sein, wobei die jeweiligen Kunststoffkomponenten unterschiedliche Additivierungen aufweisen können. Der durch eine lichtundurchlässige Kunststoffkomponente gebildete Abschnitt des Rohrkörpers kann insbesondere lichtreflektierende Eigenschaften aufweisen, wobei die Reflektion des Lichtes insbesondere auf der Oberfläche der Innenseite des Abschnittes des Rohrkörpers erfolgen kann, der durch die lichtundurchlässige Kunststoffkomponente gebildet ist.

Das erfindungsgemäße Coextrusionsverfahren zur Herstellung des Rohrkörpers zeichnet sich insbesondere dadurch aus, dass der Rohrkörper aus den beiden Kunststoffkomponenten als Endloskörper hergestellt wird, wobei der abstrahlseitige Rohrteilkörper und der rückseitige Rohrteilkörper als sich zu einem geschlossenen Rohrkörper ergänzende Abschnitte ausgebildet sind. Der Rohrkörper kann einen kreisrunden, einen elliptischen, einen polygonen oder jeden sonstigen Querschnitt aufweisen und der abstrahlseitige Rohrteilkörper besteht aus einer lichtdurchlässigen Kunststoffkomponente und der rückseitige, nicht abstrahlende Rohrteilkörper besteht aus einer nicht lichtdurchlässigen oder transluzenten Kunststoffkomponente. Wird der Rohrkörper als Endloskörper bereitgestellt, kann dieser durch eine entsprechende Ablängung aus dem Endloskörper gebildet werden. Anschließend kann der aus dem Endloskörper gebildete Rohrkörper nach Einfügen des LED-Leuchtmoduls mit Endelementen verschlossen werden.

Die Erfindung richtet sich ferner auf eine LED-Leuchtröhre mit einem sich in einer Längsachse erstreckenden Rohrkörper, wobei im Rohrkörper ein LED-Leuchtmodul angeordnet ist, und der Rohrkörper wird aus einer in einem Coextrusionsverfahren hergestellten lichtdurchlässigen Kunststoffkomponente und einer lichtundurchlässigen oder transluzenten Kunststoffkomponente gebildet. Dabei kann ein abstrahlseitiger Rohrteilkörper transparent oder wenigstens transluzent ausgebildet sein und die lichtundurchlässige Kunststoffkomponente kann zur Bildung des rückseitigen, insbesondere reflektierenden Rohrteilkörpers mit Titanoxid additiviert sein, insbesondere derart, dass der rückseitige Rohteilkörper eine reflektierende Oberfläche aufweist. Insbesondere wenn die lichtundurchlässige Kunststoffkomponente aus einem Polycarbonat oder aus einem Polymethylmethacrylat gebildet ist, kann durch eine Aadditivierung von Titandioxid ein lichtundurchlässiges, insbesondere reflektierendes Lichtverhalten der Kunststoffkomponente erzielt werden. Im Allgemeinen werden 1 bis 25, bevorzugt 2 bis 23, insbesondere 4 bis 20 und ganz besonders bevorzugt 7,5 bis 15 Gew.% bezogen auf die Gesamt Polymerzusammensetzung bzw. Kunststoffkomponente an Pigmenten für die Reflexion zugesetzt. Bei transluzenten Lichtverhalten werden diese Pigmente in geringeren Konzentrationen zugesetzt, so dass sie transluzent sind.

Polycarbonate, die als Kunststoffmaterial in Frage kommen, sind beispielsweise in EP 1 582 549 A1. beschrieben. Besonders geeignet sind aromatische Polycarbonate auf Basis von Diphenolen ausgewählt aus 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan oder Mischungen von 2 oder mehr Diphenolen hieraus.

Die thermoplastischen, aromatischen Polycarbonate haben mittlere Molekulargewichte (Gewichtsmittel M_{w}, gemessen durch GPC (Gelpermeationschromatographie mit Polycarbonatstandard) von 20.000 bis 40.000 g/mol, bevorzugt von 25.000 bis 32.000 g/mol.

Die Polymere, insbesondere Polycarbonate, können optional noch weitere übliche Polymeradditive enthalten, wie z.B. die in EP-A 0 839 623, WO-A 96/15102, EP-A 0 500 496 oder "Plastics Additives Handbook", Hans Zweifel, 5th Edition 2000, Hanser Verlag, München) beschriebenen Antioxidantien, Thermostabilisatoren, Entformungsmittel, optischen Aufheller, UV Absorber und Lichtstreumittel in den für die jeweiligen Thermoplasten üblichen Mengen.

Als UV-Stabilisatoren sind Benzotriazole, Triazine, Benzophenone und/oder arylierte Cyanoacrylate geeignet. Besonders geeignete UV-Absorber sind Hydroxy-Benzotriazole, wie 2-(3',5'-Bis-(1,1-dimethylbenzyl)-2'-hydroxy-phenyl)-benzotriazol (Tinuvin^{®} 234, Ciba Spezialitätenchemie, Basel), 2-(2'-Hydroxy-5'-(tert.-octyl)-phenyl)-benzotriazol (Tinuvin^{®} 329, Ciba Spezialitätenchemie, Basel), 2-(2'-Hydroxy-3'-(2-butyl)-5'-(tert.butyl)-phenyl)-benzotriazol (Tinuvin^{®} 350, Ciba Spezialitätenchemie, Basel), Bis-(3-(2H-benztriazolyl)-2-hydroxy-5-tert.-octyl)methan, (Tinuvin^{®} 360, Ciba Spezialitätenchemie, Basel), (2-(4,6-Diphenyl-1,3,5-triazin-2-yl)-5-(hexyloxy)-phenol (Tinuvin^{®} 1577, Ciba Spezialitätenchemie, Basel), sowie der Benzophenone 2,4-Dihydroxy-benzophenon (Chimasorb^{®} 22 , Ciba Spezialitätenchemie, Basel) und 2-Hydroxy-4-(octyloxy)-benzophenon (Chimassorb^{®} 81, Ciba, Basel), 2-Propenoic acid, 2-Cyano-3,3-diphenyl-, 2,2-Bis[[(2-cyano-1-oxo-3,3-diphenyl-2-propenyl)oxy]-methyl]-1,3-propanediylester (9CI) (Uvinul^{®} 3030, BASF AG Ludwigshafen), 2-[2-Hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin^{®} B-Cap, Clariant AG). UV Absorber sind bevorzugt im abstrahlseitigen Rohrkörper enthalten.

Die Polymer-Zusammensetzung kann UV-Absorber üblicherweise in einer Menge von 0 bis 5 Gew.%, bevorzugt 0,1 bis 2,5 Gew.% bezogen auf die Gesamtzusammensetzung enthalten.

Weiterhin können die Polycarbonate oder PMMA anorganische oder organische Farbpigmente bzw. Farbstoffe enthalten. Dazu gehören Farbstoffe der folgenden Klassen: Anthanthrone, Anthrachinone, Benzimidazole, Diketopyrrolopyrrole, Isoindolinole, Perinone, Perylene, Phthalocyanine, Quinacridone und Quinophthalone.

Als Streupigmente können alle für Thermoplasten geeignete anorganische oder organische Streupigmente eingesetzt werden. Geeignete transparente polymere Teilchen mit einer vom Polycarbonat unterschiedlichen optischen Dichte sind beispielsweise solche auf Acrylatbasis mit einer Kern-Schale-Morphologie, bevorzugt solche, wie sie in EP-A 634 445 oder WO 2007022863 offenbart werden. So können z. B. Paraloid® der Fa. Rohm & Haas oder Techpolymer® der Fa. Sekisui eingesetzt werden. Beispielsweise ist Paraloid EXL 5137 der Fa. Rohm & Haas ein Kern-Schale-Acrylat mit einem Butadien/Styrol-Kern und einer Methylmethacrylat-Schale.

Luminophore können ebenfalls zugesetzt werden.

Als wärmeableitende Additive können den Polymeren, die für die Herstellung des lichtundurchlässigen Rohrteilkörpers verwendet werden, zum Beispiel Kohlenstoff, Bornitrid oder Si02 zugesetzt werden.

Ist der abstrahlseitige Rohrteilkörper transparent ausgebildet, beispielsweise durch ein klares Polycarbonat oder durch ein klares Polymethylmethacrylat, so kann vom LED-Leuchtmodul bereitgestelltes, beispielsweise gerichtetes Licht den Rohrteilkörper passieren, und wenn der abstrahlseitige oder der rückseitige Rohrteilkörper transluzent ausgebildet ist, kann das Licht unter Streuung den Rohrteilkörper passieren.

Gemäß einer weiteren Ausführungsform kann der Rohrkörper zwischen Endelementen aufgenommen sein, wobei ein erstes Endelement beispielsweise als Gehäuse insbesondere zur Aufnahme einer Betriebselektronik für das LED- Leuchtmodul ausgeführt sein kann und ein gegenüberliegendes zweites Endelement kann als Endteil ausgeführt werden, und die LED-Leuchtröhre kann beispielsweise als handhaltbare Leuchtröhre dienen.

Die Endelemente können auch als Endkappen ausgebildet sein, die so gestaltet sind, dass die LED-Leuchtröhre in einer Leuchtstoffröhrenhalterung einsetzbar und betreibbar ist. Soll die LED-Leuchtröhre in einer Leuchtstoffröhrenhalterung betrieben werden, indem die LED-Leuchtröhre eine konventionelle Leuchtstoffröhre beispielsweise lediglich substituiert, so kann die in einer Leuchtstoffröhrenhalterung vorhandene elektrische Komponente, beispielsweise durch eine angepasste Betriebselektronik zum Betrieb des LED-Leuchtmoduls, ersetzt werden. Die Endkappen können Kontaktelemente aufweisen, die auf bekannte Weise zur elektrischen Kontaktierung der Leuchtröhre dienen, und die zugleich als Halterung zur Aufnahme der Leuchtröhre in der Leuchtstoffröhrenhalterung genutzt werden.

Insbesondere kann die LED-Leuchtröhre mit den Endelementen eine Länge aufweisen, die einer Standardlänge einer Leuchtstoffröhre entspricht. Weist die LED-Leuchtröhre ein Gehäuse als Endelement auf und ist diese somit als handhaltbare LED-Leuchtröhre ausgeführt, indem die Leuchtröhre am Gehäuse manuell gehalten werden kann, so kann beispielsweise am Gehäuse ein Bedienelement zum Ein- und Ausschalten angeordnet sein, ferner kann ein elektrisches Anschlusskabel in das Gehäuse eingeführt werden, oder im Gehäuse sind Batterien aufgenommen.

Der rückseitige bevorzugt lichtundurchlässige Rohrteilkörper kann auch in Form einer Kühlrippe ausgebildet sein.

Das LED-Leuchtmodul kann zwischen den Endelementen aufgenommen sein und sich vorzugsweise frei durch den Rohrkörper hindurch erstrecken. Das LED-Leuchtmodul kann auch nur einseitig aufgenommen sein und in den Rohrkörper hineinragen. Über der Länge des Leuchtmoduls kann dieses Haltearme aufweisen, so dass das LED-Leuchtmodul durch die Haltearme mittig im Rohrkörper abgestützt werden kann. Ferner ist es möglich, das LED-Leuchtmodul mit einer Breite zu versehen, die dem Innendurchmesser des Rohrkörpers entspricht, wobei dann lediglich auf der Abstrahlseite des LED-Leuchtmoduls LED-Elemente angeordnet werden können und es kann kein Lichtanteil zur Reflexion in den Rohrteilkörper abgestrahlt werden. Der Abstand des LED-Elementes zu der Innenoberfläche des Rohrkörpers ist variable und kann auch Kontakt zu einer oder beiden Oberflächen aufweisen.

Nach einer besonders vorteilhaften Ausführungsform der LED-Leuchtröhre kann das LED-Leuchtmodul eine in Richtung zum abstrahlseitigen Rohteilkörper weisende erste Seite mit LED-Elementen aufweisen, die direkt abstrahlendes Licht bereitstellen. Ferner kann das LED-Leuchtmodul eine in Richtung zur reflektierenden Oberfläche des rückseitigen Rohrteilkörpers weisende zweite Seite mit LED-Elementen aufweisen, die an der Oberfläche der Rohrteilinnenseite reflektiertes Licht bereitstellen. Folglich kann die LED-Leuchtröhre von den LED- Elementen direkt abgestrahltes Licht und/oder am rückseitigen Rohrteilkörper reflektiertes Licht bereitstellen. Dadurch kann sich eine besonders hohe Lichtausbeute der LED-Leuchtröhre ergeben. Durch eine entsprechend ausgelegte Betriebselektronik zum Betrieb des LED-Leuchtmoduls kann beispielsweise nur der vordere Teil der LED- Elemente betrieben werden, der direkt abstrahlendes Licht bereitstellt, oder es wird alternativ oder zusätzlich der weitere, hintere Teil der LED-Elemente betrieben, der an der Oberfläche des in rückseitigen, lichtundurchlässigen Rohrteilkörpers reflektiertes Licht bereitstellt.

Auch ist es von Vorteil, wenn das LED-Leuchtmodul einen Aluminiumträger und/oder eine HeatPipe aufweist. Beim Betrieb vom LED-Elementen kann das Problem auftreten, dass entstehende Wärme abgeführt werden muss. Hierzu kann der Träger des LED-Leuchtmoduls, der den Grundkörper des Moduls selbst bilden kann, aus Aluminium bestehen, da Aluminium eine hohe Wärmeleitfähigkeit besitzt. Weiterhin kann es von Vorteil sein, eine HeatPipe zu verwenden, um das LED-Leuchtmodul über seiner gesamten Länge zu kühlen. Die HeatPipe kann dabei beispielsweise über ein Endelement am Ende des Rohrkörpers Wärme abgeben. Nach einer weiteren möglichen Ausführungsform erstreckt sich das LED-Leuchtmodul durch den Rohrkörper und das LED-Leuchtmodul weist kleinere Abmessungen auf als der Innendurchmesser des Rohrkörpers, insbesondere um mit LED-Elementen sowohl Licht in den transparenten und/oder transluzenten Rohrteilkörper als auch in den nicht lichtdurchlässigen, jedoch reflektierenden Rohrteilkörper abzustrahlen, welches an der Oberfläche der Innenseite des nicht transparenten Rohrteilkörpers reflektiert und das LED- Leuchtmodul passieren muss. Insbesondere durch diese Anordnung ergibt sich durch Maßnahmen zur Wärmeableitung durch einen Aluminiumträger und/oder durch eine HeatPipe als Bestandteil des LED-Leuchtmoduls ein besonderer Vorteil.

Der abstrahlseitige Rohrteilkörper kann den Querschnitt des Rohrkörpers auf einem Umfangswinkel von beispielsweise 30° bis 330° und bevorzugt von 180° bilden. Ist der

Umfangswinkel des abstrahlseitigen Rohrteilkörpers größer als 180°, so überwiegt die lichtdurchlässige Kunststoffkomponente in der Coextrusion des Rohrkörpers über dem Umfang. Alternativ kann auch der rückseitige Rohrteilkörper den Querschnitt des Rohrkörpers auf einem Umfangswinkel von 30° bis 330° und bevorzugt von 180° bilden. Ist der Umfangswinkel des rückseitigen, nicht lichtdurchlässigen Rohrteilkörpers größer als 180 Grad, so weist die LED-Leuchtröhre nur einen kleineren Teilbereich des Umfangs auf, über dem Licht aus dem Rohrkörper der LED-Leuchtröhre emittiert werden kann.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele anhand der Figuren näher dargestellt. Es zeigt:
- Figur 1: eine geschnittene Längsansicht eines ersten Ausführungsbeispiels einer LED-Leuchtröhre,
- Figur 2: eine Querschnittsansicht der LED-Leuchtröhre gemäß des Ausführungsbeispiels in Figur 1 und
- Figur 3: ein weiteres Ausführungsbeispiel einer LED-Leuchtröhre.

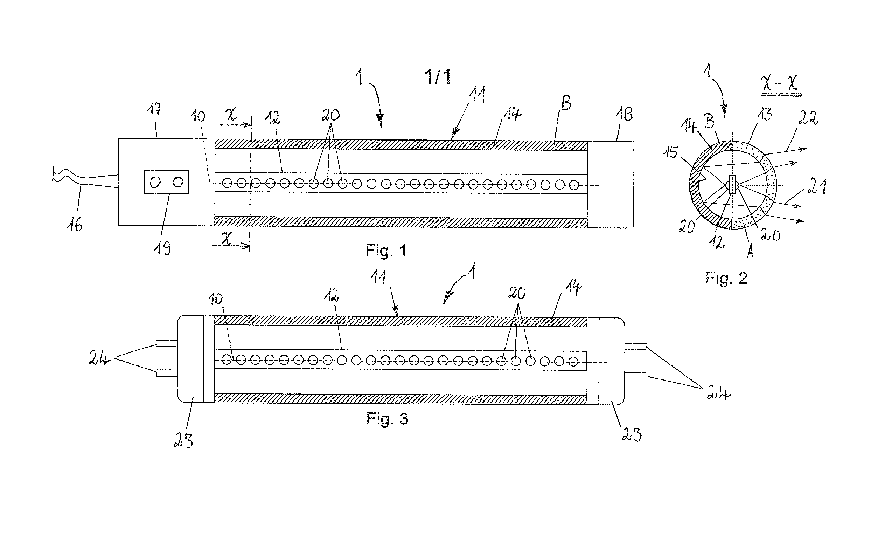

Figur 1 zeigt eine Querschnittsansicht einer LED-Leuchtröhre 1 mit einem sich entlang einer Längsachse 10 erstreckenden Rohrkörper 11, der in Längsrichtung quergeschnitten dargestellt ist. Durch den Rohrkörper 11 erstreckt sich ein LED-Leuchtmodul 12 mit einer Vielzahl von LED-Elementen 20 zur Emission von Licht, und das LED-Leuchtmodul 12 erstreckt sich ebenfalls entlang der Längsachse 10 mittig durch den Rohrkörper 11 hindurch.

Der Rohrkörper 11 ist durch die längsgeschnittene Ansicht in einer Hälfte gezeigt und die dargestellte Hälfte des Rohrkörpers 11 ist durch einen rückseitigen Rohrteilkörper 14 aus einer lichtundurchlässigen Kunststoffkomponente B gebildet. Der über der Schnittebene des Rohrkörpers 11 liegende lichtdurchlässige Rohrteilkörper weist eine Kunststoffkomponente A auf, die jedoch in der Querschnittsansicht nicht dargestellt ist.

An einem ersten Ende weist der Rohrkörper 11 ein Endelement 17 auf, das durch ein Gehäuse 17 gebildet ist. In diesem Gehäuse ist auf nicht näher gezeigte Weise eine Betriebselektronik zum

Betrieb der LED-Elemente 20 des LED-Leuchtmoduls 12 aufgenommen, und die LED-Leuchtröhre 1 ist handhaltbar ausgeführt und kann beispielsweise am Gehäuse 17 gegriffen werden, an dem ferner Bedienelemente 19 beispielsweise zum Ein- und Ausschalten der LED-Leuchtröhre 1 angeordnet sind. Rückseitig am Gehäuse 17 tritt ein Anschlusskabel 16 aus, mit dem die LED-Leuchtröhre 1 mit einer Spannungsquelle elektrisch verbunden werden kann. Auf der dem Gehäuse 17 gegenüberliegenden Seite des Rohrkörpers 1 ist ein Endteil 18 angeordnet, mit dem der Rohrkörper 11 endseitig verschlossen ist.

Das LED-Leuchtmodul 12 erstreckt sich durch den Rohrkörper 11 hindurch und ist zwischen dem Endelement 17 und dem Endteil 18 gehalten. Die Querschnittsansicht entlang der Schnittlinie X - X zeigt den Aufbau des Rohrkörpers 11, der in einem Coextrusionsverfahren aus zwei Kunststoffkomponenten A und B gebildet ist, nämlich aus einer lichtdurchlässigen Kunststoffkomponente A zur Bildung eines abstrahlseitigen Rohreilkörpers 13 und einer lichtundurchlässigen Kunststoffkomponente B zur Bildung eines rückseitigen, nicht transparenten Rohrteilkörpers 14, wie mit Figur 2 näher beschrieben.

Figur 2 zeigt eine Querschnittsansicht durch die LED-Leuchtröhre 1 entlang der Linie X-X. Im Querschnitt ist erkennbar, dass der Rohrkörper 11 aus zwei Kunststoffkomponenten A und B besteht und die Kunststoffkomponente A weist lichtdurchlässige Eigenschaften auf und die Kunststoffkomponente B weist lichtundurchlässige Eigenschaften auf. Dabei bildet die lichtdurchlässige Kunststoffkomponente A einen abstrahlseitigen Rohrteilkörper 13, durch den Licht hindurchtreten kann, und die lichtundurchlässige Kunststoffkomponente B bildet einen reflektierenden, rückseitigen Rohrteilkörper 14, und Licht kann an einer reflektierenden Oberfläche 15 auf der Innenseite des Rohrteilkörpers 14 reflektieren.

Mittig durch den Rohrkörper 11 befindet sich das LED-Leuchtmodul 12, das einen etwa rechteckförmigen Grundkörper umfasst. Der rechteckförmige Grundkörper weist eine erste Seite auf, die zum abstrahlseitigen Rohrkörper 13 weist und der Grundkörper weist eine gegenüberliegende Seite auf, die in Richtung zum rückseitigen Rohrteilkörper 14 weist. Dabei sind LED-Elemente 20 auf der in Richtung zum abstrahlseitigen Rohrteilkörper 13 weisenden Seite angeordnet, und weitere LED-Elemente 20 sind auf der Seite des Grundkörpers angeordnet, die in Richtung zum rückseitigen Rohrteilkörper 14 weist.

Werden die LED-Elemente betrieben, die zum abstrahlseitigen Rohrteilkörper 13 weisen, so kann direkt abstrahlendes Licht 21 bereit gestellt werden, das nur den abstrahlseitigen Rohrteilkörper 13 durchstrahlt. Werden die LED-Elemente 20 betrieben, die auf der Seite des Grundkörpers angeordnet sind, die in Richtung des rückseitigen Rohrteilkörper 14 weisen, so reflektiert das Licht zunächst an der reflektierenden Oberfläche 15 des rückseitigen Rohrteilkörpers 14 und tritt anschließend durch den abstrahlseitigen Rohrteilkörper 13 hindurch, so dass reflektiertes Licht 22 abgestrahlt wird. Das direkt abgestrahlte Licht 21 kann durch das reflektierte Licht 22 überlagert werden, wenn die LED-Elemente 20 auf beiden Seiten des LED-Leuchtmoduls 12 betrieben werden. Werden die LED-Elemente 20 nicht gleichzeitig betrieben, kann entweder direkt abgestrahltes Licht 21 oder reflektiertes Licht 22 bereitgestellt werden.

Figur 3 zeigt ein weiteres Ausführungsbeispiel einer LED-Leuchtröhre 1, die im Querschnitt dargestellt ist, so dass der Rohrkörper 11 -wie auch in Figur 1- durch den rückseitigen Rohrteilkörper 14 wiedergegeben ist. Der Querschnitt der in Figur 3 gezeigten LED-Leuchtröhre 1 kann ebenfalls dem Aufbau gemäß Figur 2 entsprechen. Durch den Rohrkörper 11 erstreckt sich das LED-Leuchtmodul 12 mit einer Vielzahl von LED-Elementen 20 hindurch. Der Rohrkörper 11 ist an seinen Endseiten mit Endkappen 23 verbunden, die Kontaktelemente 24 aufweisen. Die Endkappen 23 mit den Kontaktelementen 24 können gemeinsam mit der Gesamtlänge der LED-Leuchtröhre 1 eine Konfiguration gemäß einer konventionellen Leuchtstoffröhre aufweisen, so dass die LED-Leuchtröhre 1 in einer konventionellen Leuchtstoffröhrenfassung betrieben werden kann.

Die Erfindung beschränkt sich in ihrer Ausführung nicht auf die vorstehend angegebenen, lediglich bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein. Insbesondere ist in Figur 2 lediglich eine Möglichkeit eines coextrudierten Rohkörpers 11 aus einer ersten Kunststoffkomponente A und einer zweiten Kunststoffkomponente B gezeigt. Diese bilden den abstrahlseitigen Rohrteilkörper 13 und den rückseitigen Rohrteilkörper 14 zu jeweils gleich großen Teilen über dem Querschnitt des Rohrkörpers 11. Dabei kann entweder der abstrahlseitige Rohrteilkörper 13 oder der rückseitige Rohrteilkörper 14 einen Anteil über dem Umfangswinkel des Rohrkörpers 11 einnehmen, der kleiner oder größer als 180 Grad beträgt. Ferner können mehr als zwei voneinander zu unterscheidende Kunststoffkomponenten in einem gemeinsamen Coextrusionsverfahren zur Bildung eines Rohrkörpers vorgesehen sein.

### Bezugszeichenliste

- 1: LED- Leuchtröhre
- 10: Längsachse
- 11: Rohrkörper
- 12: LED- Leuchtmodul
- 13: abstrahlseitiger Rohrteilkörper
- 14: rückseitiger Rohrteilkörper
- 15: reflektierende Oberfläche
- 16: Anschlusskabel
- 17: Gehäuse, Endelement
- 18: Endteil
- 19: Bedienelement
- 20: LED- Element
- 21: direkt abgestrahltes Licht
- 22: reflektiertes Licht
- 23: Endkappe, Endelement
- 24: Kontaktelement

- A: lichtdurchlässige Kunststoffkomponente
- B: lichtundurchlässige Kunststoffkomponente

## Patentansprüche

1. Verfahren zur Herstellung einer LED- Leuchtröhre (1) mit einem sich in einer Längsachse (10) erstreckenden Rohrkörper (11) und wobei im Rohrkörper (11) ein LED-Leuchtmodul (12) angeordnet ist,
**dadurch gekennzeichnet, dass** der Rohrkörper (11) in einem Coextrusionsverfahren aus einer lichtdurchlässigen Kunststoffkomponente (A) zur Bildung eines abstrahlseitigen Rohrteilkörpers (13) und einer lichtundurchlässigen oder transluzenten Kunststoffkomponente (B) zur Bildung eines rückseitigen Rohrteilkörpers (14) hergestellt wird.

2. Verfahren nach Anspruch 1, **dadurch gekennzeichnet, dass** die lichtdurchlässige Kunststoffkomponente (A) durch ein transparentes oder transluzentes Polycarbonat oder durch ein Polymethylmethacrylat gebildet wird.

3. Verfahren nach Anspruch 1 oder 2, **dadurch gekennzeichnet, dass** die lichtundurchlässige Kunststoffkomponente (B) durch ein Polycarbonat oder durch ein Polymethylmethacrylat gebildet wird.

4. Verfahren nach einem der Ansprüche 1 bis 3, **dadurch gekennzeichnet, dass** der Rohrkörper (11) aus den beiden Kunststoffkomponenten (A, B) in einem Coextrusionsverfahren als Endloskörper hergestellt wird, wobei der abstrahlseitige Rohrteilkörper (13) und der rückseitige Rohrteilkörper (14) als sich zu einem geschlossenen Rohrkörper (11) ergänzende Abschnitte ausgebildet sind.

5. LED- Leuchtröhre (1) mit einem sich in einer Längsachse (10) erstreckenden Rohrkörper (11), wobei im Rohrkörper (11) ein LED- Leuchtmodul (12) angeordnet ist,
**dadurch gekennzeichnet, dass** der Rohrkörper (11) aus einer in einem Coextrusionsverfahren hergestellten lichtdurchlässigen Kunststoffkomponente (A) und einer lichtundurchlässigen oder transluzenten Kunststoffkomponente (B) gebildet ist.

6. LED- Leuchtröhre (1) nach Anspruch 5, **dadurch gekennzeichnet, dass** der abstrahlseitige Rohrteilkörper (13) transparent oder wenigstens transluzent ausgebildet ist und/oder dass die lichtundurchlässige Kunststoffkomponente (B) zur Bildung des rückseitigen Rohrteilkörpers (14) mit Titandioxid additiviert ist, insbesondere dass der rückseitige Rohrteilkörper (14) eine reflektierende Oberfläche (15) aufweist.

7. LED- Leuchtröhre (1) nach Anspruch 5 oder 6, **dadurch gekennzeichnet, dass** der Rohrkörper (11) zwischen Endelementen (17, 18, 23) aufgenommen ist, wobei die Endelemente (17, 18) als Gehäuse (17) insbesondere zur Aufnahme einer Betriebselektronik und als Endteil (18) ausgeführt sind oder wobei die Endelemente (23) als Endkappen (23) ausgebildet sind, durch welche die LED- Leuchtröhre (1) in einer Leuchtstoffröhrenhalterung einsetzbar und betreibbar ist.

8. LED- Leuchtröhre (1) nach einem der Ansprüche 5 bis 7, **dadurch gekennzeichnet, dass** das LED- Leuchtmodul (12) zwischen den Endelementen (17, 18, 23) aufgenommen ist und sich vorzugsweise frei durch den Rohrkörper (11) hindurch erstreckt.

9. LED- Leuchtröhre (1) nach einem der Ansprüche 5 bis 8, **dadurch gekennzeichnet, dass** das LED- Leuchtmodul (12) eine in Richtung zum abstrahlseitigen Rohrteilkörper (13) weisende Seite mit LED- Elementen (20) aufweist, welche LED- Elemente (20) direkt abstrahlendes Licht (21) bereitstellen und/oder dass das LED- Leuchtmodul (12) eine in Richtung zur reflektierenden Oberfläche (15) des rückseitigen Rohrteilkörpers (14) weisende Seite mit LED- Elementen (20) aufweist, welche LED- Elemente (20) an der Oberfläche (15) reflektiertes Licht (22) bereitstellen.

10. LED- Leuchtröhre (1) nach einem der Ansprüche 5 bis 9, **dadurch gekennzeichnet, dass** das LED- Leuchtmodul (12) einen Aluminiumträger und/oder eine HeatPipe aufweist.

11. LED- Leuchtröhre (1) nach einem der Ansprüche 5 bis 10, **dadurch gekennzeichnet, dass** der abstrahlseitige Rohrteilkörper (13) den Querschnitt des Rohrkörpers (11) auf einem Umfangswinkel von 30° bis 330° und bevorzugt von 180° bildet.

12. LED- Leuchtröhre (1) nach einem der Ansprüche 5 bis 11, **dadurch gekennzeichnet, dass** der rückseitige Rohrteilkörper (14) den Querschnitt des Rohrkörpers (11) auf einem Umfangswinkel von 30° bis 330° und bevorzugt von 180° bildet.
